# EUROPEAN PATENT APPLICATION

(11) **EP 1 284 579 A1**
(43) Date of publication of application: **19.02.2003**
(21) Application number: 02015768.1
(22) Date of filing: 15.07.2002
(51) Int. Cl.: H04Q 7/34

(54) **Determining dropped calls statistics based on mobile subscriber location information**

(30) Priority: 18.08.2001 GB 0120192
(71) Applicant: MOTOROLA, INC., Schaumburg, IL 60196 (US)
(72) Inventor: Franko, Roni, Or Yeuda 40405 (IL)
(74) Representative: McCormack, Derek James

(57) **Abstract**

A method of processing information about dropped calls in a cellular radio communication system comprises:
monitoring respective locations of mobile stations, MSs, participating in calls;
monitoring when such calls are dropped; and
storing information about locations at which calls are dropped. Mobile and base stations for use in the method are also described.

## Description

### Field of the Invention

This invention relates to cellular-based communication systems and methods and mobile and base stations for use therein. In particular it relates to producing information relating to the technical quality of service provided to subscribers with mobile stations participating in calls in use of cellular-based communication systems.

### Background of the Invention

In the field of this invention it is known that operators of cellular mobile communication systems require information about the technical performance of their systems. Generally, such information is produced in various known ways, including:
a) Coverage and quality prediction tools.
b) Statistical raw data from sites.
c) Collecting Drive Test data.
d) Customers' complaints.

However, these known approaches are not satisfactory in that they do not provide the operator with information which accurately describes the quality of coverage to subscribers with mobile stations, in particular whether the connectivity of the subscriber is likely to good during a call or whether there is a possibility that the call may be dropped.

Dropped calls present a significant problem in celluar mobile communication systems. For example, the dropped call rate may be for example between 2 to 4 percent based on the total number of calls made, which means that many calls may be dropped every day.

In this specification the expression 'call' is used to indicate a communication between two or more parties. The information to be transmitted in the communication when established will usually comprise information representing speech but it may alternatively or in addition comprise data (e.g. text) and/one or more other forms, e.g. picture or video information.

In this specification the expression 'dropped call' is used to refer to any call that is terminated for any reason other than by choice of one or more of the participants, and thus includes, but is not limited to, calls dropped due to inadequate signal strength, excessive interference, failed handover implementation, inadequate MS battery power and so on.

Further inadequacies or problems associated with one or more of the known arrangements referred to earlier for producing information relating to quality of service in cellular systems include:
a) The dropped calls which are located may be limited to the area of a selected drive test route and/or may depend on customers' complaints. Therefore, located dropped calls obtained represent only a small proportion of the overall occurrence of dropped calls.
b) Collecting more information requires more drive testing, which means investing in equipment and drive test teams.
c) Extensive cycle times are required to solve customers' complaints on dropped calls.
d) Extensive cycle times are required to check the quality of the optimisation or other planning processes implemented using conventional data acquisition techniques.
e) When planning a new site location there is no information about how many dropped call locations would be eliminated.

The present inventor has therefore identified that it would be desirable to improve the obtaining and processing of information concerning dropped calls in cellular mobile communication systems.

### Statement of Invention

According to the present invention in a first aspect there is provided a method of processing information about dropped calls in a cellular radio communication system, comprising:
monitoring respective locations of mobile stations (MSs)participating in calls;
monitoring when such calls are dropped; and
storing information about locations where such calls are dropped.

In this specification the expression 'mobile station' or 'MS' includes portable or mobile telephones, portable or mobile radio communications units and the like. Systems which include MSs and other units for radio communication with them are referred to herein as mobile radio communications systems.

The monitoring and, if required, the recording of the respective locations of MSs monitored may be updated regularly, e.g. every X seconds, where X is for example between 1 and 100, e.g. typically 15.

Information relating to the location of MSs of subscribers to the system may be obtained by the system in one of the ways known to those skilled in the art. Such conventional methods may be divided into two basic types, i.e. generally involving determination of location by the MS or by one or more base stations.

Location may be determined by a MS by use of known Global Positioning System (GPS) apparatus included in or with the MS.

For location determination through the base stations, various systems are commercially available, e.g. Geometrix™, available from the Grayson Wireless division of Allen Telecom Inc. This uses, inter-alia, Time Difference of Arrival (TDOA) and Angle of Arrival (AOA) techniques. The TDOA and AOA techniques employ measurement of the time of or angle of arrival of a MS signal at three or more separate base stations.

In all cases, the location of a MS may be identified by constructing the (Cartesian or polar) co-ordinates of the location and numerical values representing these co-ordinates may then be recorded, e.g. as digital numbers. The measured location of a MS may be stored in the MS and/or in a base station serving the MS.

It is to be noted that detection of dropping of a call in a cellular system is known per se. Such detection may be carried out by the MS or the base station communicating with it, or both. For example, a control signal may be included usually in each communication frame in signals sent via a speech traffic channel between the MS and the base station. If it is detected that such a signal is missing the call may be taken as having been dropped. The channel may then be re-allocated by the base station to the MS another subscriber. In contrast, where a call is deliberately terminated by a subscriber, the termination is normally detected by a signal produced by the MS in response to the subscriber pressing or touching a button or key to indicate the end of the call.

In the method according to the first aspect of the invention, the method may include, for each MS, the step of storing information indicating the location of the MS in a register during the call; and either:
(i) if the call is correctly terminated, clearing the register; or
(ii) if the call is dropped, transferring a signal giving information about the location in the register to a database. The database may be included within or associated with a base station with which the MS can communicate. The register may also be included within the base station although it may alternatively or in addition be included within the MS.

The method according to the first aspect of the invention may further include the step of monitoring and/or storing information relating to signals received by the monitored MSs, e.g. received signal strength and/or quality, as a function of location. The monitoring may be carried out by the MS and the storing may be carried out by the base station by communication of the information from the MS. The information may be communicated together with any location and dropped call information sent by the MS to the base station.

In the method according to the first aspect of the invention, information indicating the occasion, e.g. the date and time, when a call has been dropped may be recorded together with the location information. For example, the date and time when the location of an MS was last measured prior to a call being dropped may be recorded.

The information stored in the database in the method according to the first aspect of the invention may be employed to construct a table listing the locations of MSs where calls were dropped and optionally other related information, e.g. the date and time indicating when the calls were dropped.

The information stored in the database may be employed to produce a map showing the locations of MSs at which calls have been dropped. The map may be of a selected region and/or a selected period of time when call drops occurred.

The method according to the first aspect of the invention may further include the step of using the stored information about locations where calls have been dropped and any other optionally stored information or maps, tables or the like produced from such information for any one or any combination of the following purposes:
(i) to plan system changes;
(ii) to optimise system performance;
(iii) to identify malfunctions in the system.

As noted earlier, in the method according to the first aspect of the invention the recording and or/storing of information relating to location of MSs at which calls are dropped and optionally related information such as information relating to the signals received at such units, may be carried out at one or more base transceiver stations, e.g. a base station serving the monitored MSs. The information may be collected by the base station itself or by the MS and periodically transferred to the base station. Information relating to separate calls is desirably recorded as separate database entries at the base station. The base station may employ a digital signal processor and digital memory store to carry out these functions.

Alternatively, or in addition, collecting and/or storing of such information may be carried out at a higher network node, for example at a central control unit or switching station or an Operations and Management Centre. For example, collection and storage of information at such a higher network node may take place from a plurality of base stations in the network.

According to the present invention in a second aspect there is provided a mobile station, MS, which may be used in the method according to the first aspect and which is operable to:
derive information relating to its location;
detect when a call in which the MS has participated has been dropped; and
transfer to a database a signal including information about the location of the MS when a call has been dropped.

According to the present invention in a third aspect there is provided a base station for use in a method according to the first aspect of the invention and wherein the base station is operable to record and/or store and optionally process information relating to the locations of MSs at which calls have been dropped and optionally related information about when such drops have occurred and/or the signals received by such MSs. The base station may be operable to transfer the stored information to a database associated with a higher network node.

The invention beneficially allows information about dropped calls to be recorded and used to improve operation of a cellular mobile communication system, and can provide other advantages, including the following:
a) The cellular system operator may be provided with a real time geographic map that contains all (or a usefully large statistical sample) of the dropped calls and related signal information, e.g. received signal strengths and/or quality in the system in a specific period (e.g. an hour, or a day, or a week etc.)at units where calls are dropped. Using this information simplifies the identification of an area that contains a large quantity or concentration of dropped calls and lack of suitable communications coverage.
b) An optimisation engineer may detect problem areas from a map showing dropped call locations. With this dropped call information the engineer can make an intelligent decision when attempting to optimise the system, rather than base any decision on a local problem, as would be the case for data collected from a drive test.
c) An optimisation engineer may use the information collected by the method of the invention to obtain early feedback on the success of an attempted solution that has been implemented in the system. (Usually a change in a site, especially in an urban area, can influence another area that has the same frequency reuse and cause the dropped call rate to rise or fall, thus duration of such disruption may be reduced).
d) The location of dropped calls will assist in discovering specific areas where performance has been reduced. For example, a sudden rise in dropped calls in an area that was not influenced by any change in the system may be detected. Such a problem may be due to a malfunction in hardware /software used in the system and/or other outside influences. This will improve customer service and satisfaction.
e) The information recorded is always available and updated in real time without the need for any drive testing whatsoever, with resulting efficiencies and cost benefits.

The present invention is advantageously suitable for use in any cellular mobile radio communications system such as systems operating according to any of the following: Universal Mobile Telephone Standard (UMTS), Global System for Mobile Communications (GSM), Integrated Digital Enhanced Network(iDEN™) manufactured by Motorola Inc., Narrowband Advanced Mobile Phone Service (NAMPS), Code Division Multiple Access (CDMA), Terrestrial Trunked Radio (TETRA) and so on.

Embodiments of the present invention will now be described, by way of example only, with reference to the accompanying drawings, in which:

### Brief Description of the Drawings

Figure 1 is a schematic illustration of a cellular mobile communication system in which an embodiment of the present invention may be implemented; and
Figure 2 is a process flowchart showing process steps carried out in a method which is an embodiment of the invention.

### Description of Embodiments of the Invention

In a first embodiment, the invention is applied in a Universal Mobile Telephone Standard (UMTS) cellular communication system, but it is to be appreciated that the invention can be applied in any other suitable cellular communication system.

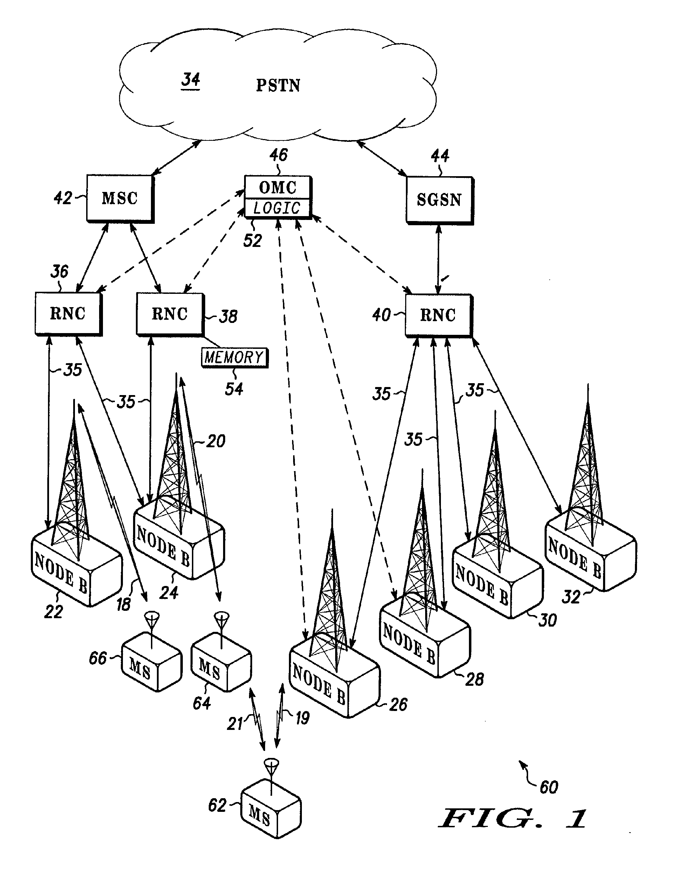

Figure 1 shows a UMTS cellular communication system 60.

A plurality of MSs 62 to 66 communicate over radio links 18 to 21 with a plurality of base stations, referred to under UMTS terminology as Node-Bs, 22 to 32. For clarity purposes, only a limited number of MSs and Node-Bs of the system are shown.

The Node-Bs 22 to 32 are connected to external networks, for example, the public-switched telephone network (PSTN) or the Internet, 34 through Radio Network Controller stations (RNC) (in UMTS terminology) 36 to 40 and plural mobile switching centres MSCs), such as MSC 42 (the others are, for clarity, not shown) and Serving GPRS Support Nodes (SGSN) such as 44.

Each Node-B 22 to 32 contains one or more transceiver units and communicates with the rest of the cell-based system infrastructure via the I_{ub} interface 35 as defined in the UMTS specification.

Each RNC 36 to 40 may control one or more Node-Bs 22 to 32. Each MSC 42 provides a gateway to the external network 34, whilst the SGSN 44 links to external packet networks.

An Operations and Management Centre (OMC) 46 is operably connected to RNCs 36 to 40 and Node-Bs 22 to 32 (shown only with respect to Node-B 26 and Node-B 28 for clarity), and administers and manages the parts of the cellular telephone communication system 60, as will be understood by those skilled in the art.

In this embodiment, the Node-Bs 22 to 32 and the OMC 46 have been adapted, by provision of dropped call processing modules, to offer, and provide for, processing of dropped calls, as will be described in more detail later. However, this adaptation may be implemented in any suitable manner to provide suitable apparatus. The modules may consist of a single discrete entities added to a conventional OMC and conventional Node-Bs, or may alternatively be formed by adapting existing parts of a conventional OMC and conventional Node-Bs, for example by reprogramming of a one or more processors in each.

As such the required adaptation may be implemented in the form of processor-implementable instructions stored on a storage medium, such as a floppy disk, hard disk, PROM, RAM or any combination of these or other storage media. Furthermore, whether a separate entity or an adaptation of existing parts or a combination of these, the module may be implemented in the form of hardware, firmware, software, or any combination of these.

It is also within the contemplation of the invention that such adaptation of transmission characteristics may alternatively be controlled, implemented in full or implemented in part by a module added to or formed by adaptation of any other suitable part of the communication system 60, for example MSC 42.

Further, in the case of other network infrastructures, implementation may be at any appropriate switching node such as any other appropriate type of base station, base station controller, central switch, etc. Alternatively the various steps involved in determining and carrying out such adaptation (as will be described in more detail below) can be carried out by various components distributed at different locations or entities within any suitable network or system.

At repeated intervals the respective location of the MSs 62 to 64 are determined. This may be implemented using any suitable conventional method, such as one of the methods referred to earlier.

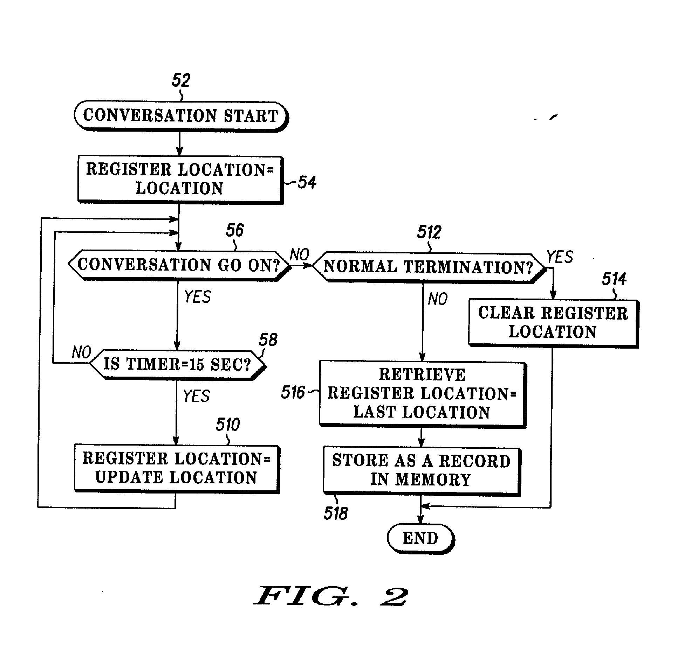

Figure 2 is a flowchart showing process steps performed in a first embodiment by a dropped call processing module located at Node-B 22, shown in Figure 1. In this embodiment the location of MS 66 is determined through the MS itself, as described above, and communicated regularly to the Node-B. However, this location determination may alternatively be implemented through the Node-B 22 as also described above.

When a call is established a conversation begins (step s2). The location of the user is placed in step s4 in a location register in the dropped call processing module. A separate register is provided for each call/communication unit being processed by the Node-B 22. The data put in the register comprises the X,Y coordinates (e.g. longitude and latitude) of the MS 66, and the date and time. (It is not necessary to store the user ID, hence privacy may be maintained if desired).

At step s6 it is determined whether the call continues. Whilst the call continues, every time an update time is passed (step s8) the register is updated (step s10). Any suitable update rate may be used - in this example the register is updated approximately every 15 seconds.

If at step s6 it is determined that the call has been terminated, then at step s12 the dropped call processing module determines whether the call was terminated correctly (normally) by the generation of a signal in response to a normal action of the user, by pressing a button or touching a key etc, or was terminated by dropping of the call. If the termination is determined to have been produced correctly by the user, then at step s14 the register is cleared and the process is completed with respect to this call. The location register may then be used for the next or some other future call or MS.

However, if at step s12 it is determined that the call was not terminated correctly, i.e. the call was dropped, then at step s16 the data in the register is retrieved as the final (last) previous location of the MS 66. At step s18, the final location data including the date and time when the location was last measured indicating when the call was dropped, is placed in a separate store, memory or database in the dropped call processing module.

The above process is repeated for each call (or alternatively any usefully large statistical sample of calls) such that the separate store, memory or database in the dropped call processing module accumulates or collects locations corresponding substantially (i.e. within 15 second movement) to where calls were dropped.

This dropped call location data may be further processed in any desired way.

One preferred possibility is as follows. Every hour (or any other chosen time interval, or whenever a given number of dropped calls are stored) the Node-B 22, and any other Node-Bs or other base stations which have dropped call processing modules, send the dropped call location data to a higher node in the network. The higher node thereby collects such data from a plurality of base stations, e.g. all base stations connected to the higher node.

In this example the data is sent to the OMC 46, as this unit is a higher node which performs control and general housekeeping type functions in the system. However, the data may alternatively or additionally be sent to and collected at any one or more other network nodes, as desired, for example the MSC 42 or some other central switch or controller. The OMC 46, MSC 42 etc. may have versions of dropped call processing modules as required to implement such functions. Such collected together data may then be made available to all the base stations.

The information stored in the database may be employed to construct a table listing the locations of MSs where calls were dropped and optionally other related information, e.g. the date and time indicating when the calls were dropped.

GIS or similar software (e.g. ArcView™ or Mapinfo™) may be used, e.g. by a processor which can retrieve information from the database, such that the data may be easily retrieved and presented in a display in the form of a geographic map. The data may be represented by the map in any selected area and time interval.

The stored data, or a map or table etc. produced from it, may be used as a basis for implementing or planning system design changes, e.g. topology, in an attempt to reduce the occurrence of dropped calls or in an attempt to achieve any other form of benefit, for example optimising system performance and/or identifying malfunctions in the system.

A further embodiment of the invention will now be described, which may be implemented in conjunction with the above described embodiment.

The value of one or more parameters describing the signals received by MSs, e.g. signal strengths received by the MSs, e.g. MS 66, and the location of the MSs when receiving such signal strength, are recorded by the MSs. Periodically information collected and recorded by the MSs is communicated from the MSs to one or more of the base station(s), e.g. Node-B 22. For example, the received signal information may be sent whilst the MS is in idle mode (with the MS switched on), about every 1 hour (or other selected time period),together with the information about location and other information related to any dropping of a call as described earlier. The received signal information may be collected from multiple base stations and represented on GIS (in the same way as for dropped calls as described earlier).

The total number of dropped calls at any given base station may reach several thousand calls per day, which is much less than the total number of calls in the system. Such levels therefore may readily be recorded in the above methods at the base station using already available memory capacity at the base station, although additional memory capacity may be added if desired.

The received signal records collected from a plurality of base stations, e.g. in the central switch or controller, may reach some tens of millions records for a day. Therefore, say, a 10 GB memory may be required to store this information. Thus, at such a higher node, it may be desirable to add memory capacity in addition to that already in use.

When location determination is performed using the base station there should be little or no time delay noticed at the MS caused by the location determining process. However, if the location determination process is performed by the MS, it may take about 500ms in the UMTS system to transfer details of the X,Y coordinates to the serving base station. The system may be arranged so that communication of information relating to location and related information as described earlier from the MS to the base station is carried out in a manner that has minimum delay effect as noticed by the user of the MS. For example, the information may be transferred within a control signal that is sent via the traffic channel.

## Claims

1. A method of processing information about dropped calls in a cellular radio communication system, the method comprising:
monitoring respective locations of mobile stations, MSs, participating in calls;
monitoring when such calls are dropped; and
storing information about locations at which calls are dropped.

2. A method according to claim 1 and which includes storing information indicating the occasion when a call has been dropped.

3. A method according to claim 1 or claim 2, and which includes, for each MS whose location is monitored, the step of:
storing the location of the MS in a register during the call; and either:
(i) if the call is correctly terminated, clearing the register; or
(ii) if the call is dropped, transferring the location information in the register to a database.

4. A method according to claim 3 and wherein the register is included within the MS or in a base station with which the MS is in communication.

5. A method according to any one of the preceding claims, the method further including the step of:
measuring and storing information describing the signal received by a MS as a function of location.

6. A method according to claim 5 and wherein the received signal strength an/or quality is measured and recorded together with the location of the MS.

7. A method according to any one of the preceding claims, and wherein the said information is transferred to and stored in a database at a base station.

8. A method according to any one of the preceding claims and which includes:
collecting at a higher node from a plurality of base stations, information about the location of MSs served by the base stations at which calls have been dropped.

9. A method according to any one of the preceding claims and wherein a dropped call incidence table is constructed indicating locations and times of MSs participating in dropped calls and optionally other information such as received signal information at such MSs.

10. A method according to any one of the preceding claims and wherein a map is produced from the stored information showing the locations at which calls have been dropped.

11. A method according to any one of the preceding claims and which further includes the step of:
using the stored information about dropped calls for any one or more of:
(i) to plan system changes;
(ii) to optimise system performance;
(iii) to identify malfunctions in the system.

12. A mobile station, MS, for use in the method according to any one of claims 1 to 11, the MS being operable to:
derive and record information about the location of the MS;
monitor dropping of calls in which the MS has been participating; and
transfer information about the location of the MS at which calls have been dropped to a database.

13. A MS according to claim 12 and wherein the MS is operable to record in a register the location of the MS during a call and upon termination of the call either:
(i) if the call has been correctly terminated, to clear the register; or
(ii) if the call has been dropped, to transfer the location in the register to a database.

14. A MS according to claim 12 or claim 13 and which is further operable to measure and record information describing the signal received by the MS from a serving base station.

15. A MS according to any one of claims 12 to 14 and wherein the received signal strength an/or quality is measured and recorded in operation by the MS together with the location of the MS.

16. A MS according to any one of claims 12 to 15 and which is operable to send a signal including information to be stored in a database to a base station in communication with the MS.

17. A base station for use in a method according to any one of claims 1 to 11 and wherein the base station is operable to store and optionally process information relating to the locations of MSs at which calls have been dropped and optionally related information about when such drops have occurred and/or the signals received by such MSs.

18. A base station according to claim 17 and which is operable to transfer the stored information to a database associated with a higher network node.
